# EUROPEAN PATENT APPLICATION

(11) **EP 2 448 274 A2**
(43) Date of publication of application: **02.05.2012**
(21) Application number: 11177673.8
(22) Date of filing: 16.08.2011
(51) Int. Cl.: H04N 13/00

(54) **A method and apparatus for inserting object data into a stereoscopic image**

(30) Priority: 26.10.2010 GB 1018012
(71) Applicant: Sony Corporation, Tokyo 108-0075 (JP)
(72) Inventor: Thorpe, Jonathan Richard, S023 7HF, Hampshire (GB)
(74) Representative: Jackson, Jonathan Andrew

(57) **Abstract**

A method of inserting object data into a stereoscopic image for display on a screen, comprising the steps of: providing a first image having a foreground component and a second image having a foreground component, the second image foreground component being a horizontally displaced version of the first image foreground component; inserting a first opaque section into the first image, and a second opaque section in the second image, the second opaque section being a horizontally displaced version of the first opaque section, wherein the displacement between the first image component and the second image component is less than the displacement between the first opaque section and the second opaque section; and inserting the object data onto the first opaque section for display on the screen.

## Description

The present invention relates to a method and apparatus for inserting object data into a stereoscopic image.

In order to improve the accessibility of video content (such as a live broadcast or a feature film) to those people having impaired hearing, closed captioning is provided. This allows dialogue or information relating to sounds in a piece of content to be written onto the screen. A similar system exists where the language of the content is different to that spoken by the viewer, where subtitles will be provided.

Presently, effort is being made to allow users to view video material captured in 3D in the home. However, it is not easy to incorporate closed captioning into 3D material. This is because the 3D position of the caption is difficult to perceive by the user. In particular, if the caption is placed over the image then the perception of the position of the caption must be in front of the images. However, if the 3D image occupies a position in 3D space in front of the caption, so that the user's eyes converge 'in front' of the caption, then the user receives a conflicting cue. This causes discomfort to the user.

It is possible to adjust the position of the closed caption in dependence on the position of the subject in 3D space. In other words, it is possible to ensure that the position of the closed caption is in front of the subject in 3D space. However, this solution has two distinct disadvantages. Firstly, this solution is not particularly suited to live action, where the subject may suddenly move forward, thus "breaking through" the closed caption. Secondly, in order to ensure that the closed caption is placed in the correct place, a depth map of the scene is required. The depth map determines, for each pixel in the scene, the correct distance from the camera of that pixel in the scene. The generation of the depth map is computationally intensive.

It is desirable to include closed captions in a 3D image which is both suitable to live footage and which may be generated in a less computationally intensive manner. It is an aim of the present invention to assist in providing such a solution.

According to one aspect of the present invention, there is provided a method of inserting object data into a stereoscopic image for display on a screen, comprising the steps of: providing a first image having a foreground component and a second image having a foreground component, the second image foreground component being a horizontally displaced version of the first image foreground component; inserting a first opaque section into the first image, and a second opaque section in the second image, the second opaque section being a horizontally displaced version of the first opaque section, wherein the displacement between the first image component and the second image component is less than the displacement between the first opaque section and the second opaque section; and inserting the object data onto the first opaque section for display on the screen.

The method may comprise inserting the object data onto the second opaque section, wherein the object data is inserted in the second image at a similar pixel position to the object data inserted in the first image such that the object data is viewable as being substantially located on the screen plane.

The method may comprise inserting the first opaque section at a location in the first image which is determined in dependence upon the number of objects and/or the amount of movement between successive images in a section of the image.

The location of the first opaque section may be determined in accordance with a threshold number of objects and/or movement in the first image.

The method may comprise extracting position information indicating the position of the first opaque section from an input data stream.

The method may comprise analysing the first image and determining the location of the first opaque section from said analysis.

The dimensions of the opaque section may be determined in accordance with the size of the object data and/or the amount of movement and/or the number of objects in the first image.

The object data may be supplemental visual content.

The displacement between the first opaque section and the second opaque section may be fixed at a predetermined distance.

The displacement between the first opaque section and the second opaque section may be a proportion of the screen width.

The proportion of the screen width may be 1%.

Additionally, there may be provided a computer program product comprising computer readable instructions which, when loaded onto a computer, configure the computer to perform a method according to any one of the aforesaid embodiments.

Additionally, a storage medium configured to store the computer program therein or thereon may be provided.

According to a different aspect, there is provided an apparatus for inserting object data into a stereoscopic image for display on a screen, comprising: a display controller operable to provide a first image having a foreground component and a second image having a foreground component, the second image foreground component being a horizontally displaced version of the first image foreground component; said display controller being further operable to insert a first opaque section into the first image, and a second opaque section in the second image, the second opaque section being a horizontally displaced version of the first opaque section, wherein the displacement between the first image component and the second image component is less than the displacement between the first opaque section and the second opaque section; and operable to insert the object data onto the first opaque section for display on the screen.

The display controller may be further operable to insert the object data onto the second opaque section, wherein the object data is inserted in the second image at a similar pixel position to the object data inserted in the first image such that the object data is viewable as being substantially located on the screen plane.

The display controller may be further operable to insert the first opaque section at a location in the first image which is determined in dependence upon the number of objects and/or the amount of movement between successive images in a section of the image.

The location of the first opaque section may be determined in accordance with a threshold number of objects and/or movement in the first image.

The display controller may be further operable to extract position information indicating the position of the first opaque section from an input data stream.

The display controller may be further operable to analyse the first image and determining the location of the first opaque section from said analysis.

The dimensions of the opaque section may be determined in accordance with the size of the object data and/or the amount of movement and/or the number of objects in the first image.

The object data may be supplemental visual content.

The displacement between the first opaque section and the second opaque section may be fixed at a predetermined distance.

The displacement between the first opaque section and the second opaque section is a proportion of the screen width.

The proportion of the screen width may be 1%.

Embodiments of the present invention will now be described by way of example only and with reference to the accompanying drawings, in which:
Figure 1 describes an overall system of embodiments of the present invention;
Figure 2 describes a more detailed diagram of a reception device shown in Figure 1;
Figure 3 is a schematic diagram showing the positioning of the closed caption and the text contained therein in 3D space; and
Figure 4 is a diagram explaining the displacement required by each object in the 3D scene.

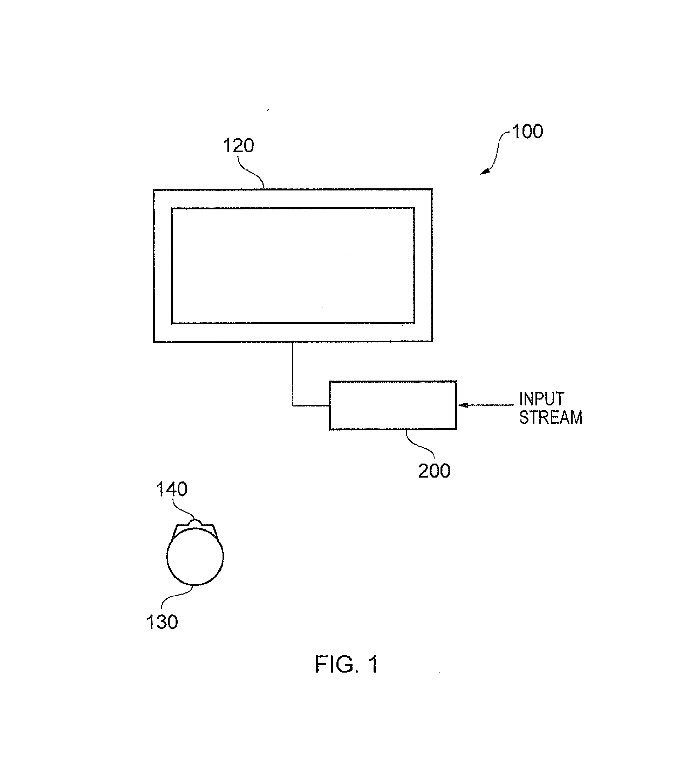

Referring to Figure 1, a system according to embodiments of the invention is shown. This system 100 includes a display 120. The display 120 is 3D enabled. In other words, the display 120 is configured to display stereoscopic images which allow the user to experience a 3D effect when viewing the content. This display 120 may interact with shutter glasses worn by the user or may require the use of polarised glasses by a user to display the stereoscopic images such that a 3D effect is achieved. In Figure 1, a user 130 is shown wearing shutter glasses 140. However, any other type of glasses such as polarised glasses is envisaged. Moreover, advances in 3D technology may mean that it is possible for the user 130 to view the images having a 3D effect without the use of any glasses at all. For example, the display 120 may use technology such as a perpendicular lenticular sheet to enable the user 130 to achieve the 3D effect without glasses.

Connected to the display 120 is a control box 200. The control box 200 is connected to the display using wires, although the invention is not so limited. The connection may be wireless, or may be achieved over a wired or wireless network or may be integrated into the display.

An input stream of content is fed into the control box 200. This content may include 3D footage or may be 2D footage that is to be converted by the control box 200 into 3D content. In embodiments, the input stream may also include other data. This other data may consist of metadata which is data about the content, and is usually smaller in size than the content it is describing. Other data may include depth information. The depth information describes the depth of each pixel within a scene. From this information the control box 200 may calculate the required disparity between the two images which form the stereoscopic image on the display 120. Additionally or alternatively, the depth information may be disparity information which reduces the amount of computation required by the control box 200.

The input stream also contains object data. The object data is data describing an object to be inserted into the displayed image. One example of the object data is closed caption information. Closed caption information is a visual representation of audio data. For example, the closed caption information may be subtitles describing the dialogue between two characters on the screen. Also, closed caption information may describe background sounds within the content, for example indicating that a door is slamming shut. Closed caption information is primarily directed at users having a hearing impediment.

Object data may also include supplemental visual content. Supplemental visual content is visual content that supplements the image content to be displayed. This may include a score in a soccer game, or a rolling update of current news headlines. Other examples of supplemental visual content include advertisements, information relating to characters or sportspeople currently on-screen, commentary on the events on the display or any other kind of visual data that may supplement the information provided in currently displayed images. Object data may also include electronic program guide information, or any kind of data generated by the television display or the set-top box such as a television menu or any kind of on-screen graphics.

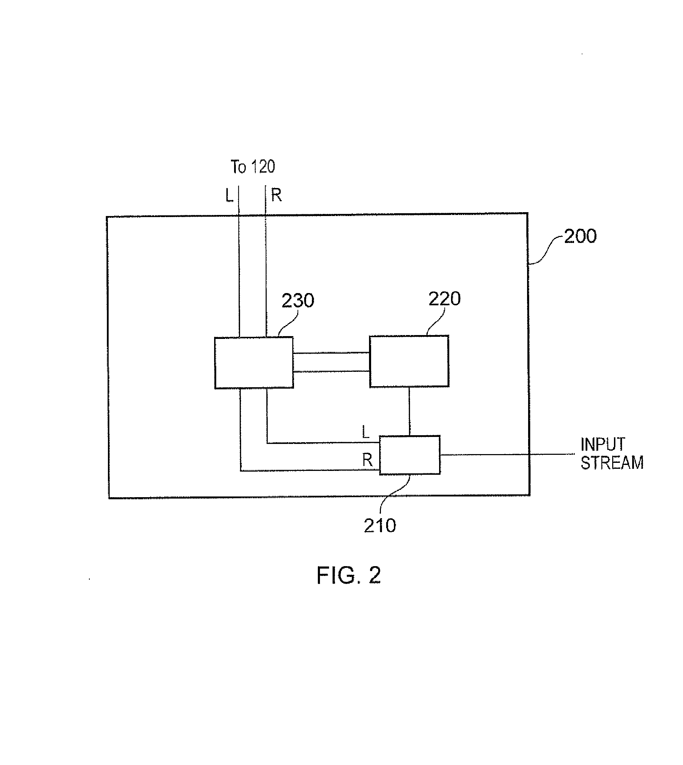

Referring to Figure 2, the control box 200 is shown in greater detail. The input stream is fed into an object data extractor 210. The object data extractor 210 is typically a demultiplexor that, in embodiments, removes the received object data from the input stream. In the example of the object data including closed caption information, the object data extractor 210 knows that the closed caption information is present by analysing the Packet Elementary Stream (PES). Specifically, the PES_packet_data_bytes will be encoded as a PES_data_field defined by the European Standard Telecommunications Series (ETSI) when closed caption information is included in the input stream. When the object data extractor 210 identifies that closed caption information is included in the input stream, the object data is extracted from the packet. The skilled person will appreciate that although the foregoing has been explained with reference to the ETSI standard, the input stream could in fact be any broadcast standard, or played from any stored or recorded content, such as that provided on a Blu-Ray disc, for example.

Additionally, the object data extractor 210 outputs to a display device 230 the left eye image and the corresponding right eye image (which is a horizontally displaced version of the left eye image). Together the left eye image and the right eye image form a stereoscopic image. The amount of displacement between objects in the left eye image and the right eye image determine the position of the object in 3D space. In other words, as the skilled person appreciates, the horizontal displacement between the left and right eye image determine the depth of the object as perceived by the user.

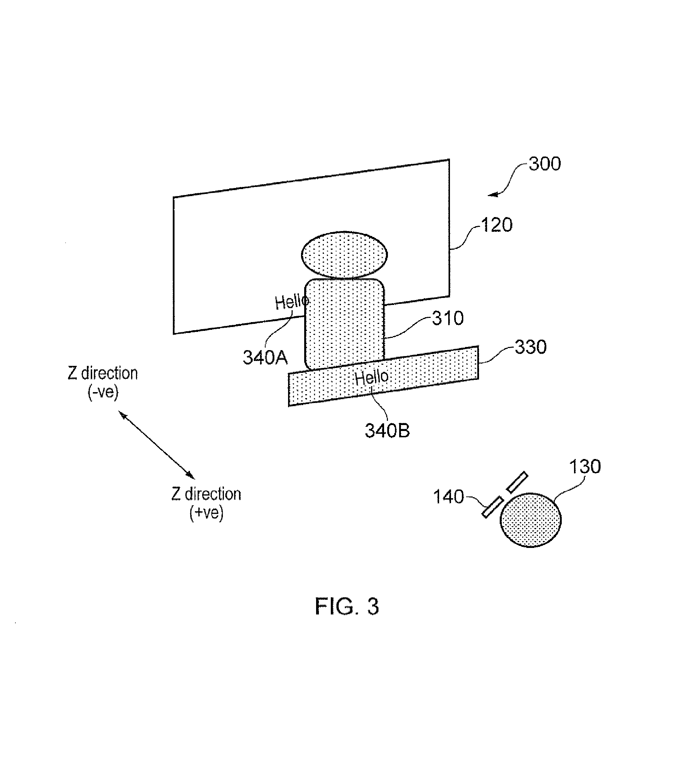

The extracted object data is fed to an object data handling device 220. The object data handling device 220 formats the object data using any font, colour or size information included in the PES packet received over the input stream. In other words, the object handling device 220 applies formatting to the object data so that it may be correctly displayed. The object handling device 220 also generates an opaque section which will be inserted into the content when displayed on the screen. The opaque section will be placed within the 3D space at one particular depth and will block out the image behind. This ensures that anything overlapping the opaque section will be easily read. The depth at which the opaque section will be placed may be any depth in front of the object of importance in the scene (hereinafter referred to as the foreground component). The displacement between the pixel position of the opaque section in the left image and the right image will define the depth of the opaque section. The opaque section will be described later with reference to Figure 3.

The formatted object data and the left eye version and the right eye version of the opaque section are fed into the display device 230. The display device 230 is also fed the left and right eye images from the object data extractor 210. The display device 230 generates a left eye version and a right eye version of the image for stereoscopic display. In particular, the display device 230 generates a left eye version of the image for display by overlaying the left eye version of the opaque section onto the left eye version of the image. Similarly, the display device 230 generates a right eye version of the image for display by overlaying the right eye version of the opaque section onto the right eye version of the image. The object data is also inserted into both the left eye image and the right eye image. It should be noted here that the object data, in embodiments, may be inserted with little or no horizontal displacement between the left eye version and the right eye version. This would enable the object data to be perceived in the stereoscopic image as being located on the screen plane. In other words, the object data is perceived by the user to be located at the same or similar depth as the screen. This is useful because the user focuses on the screen when viewing and so having the object data placed on or around the screen plane enables the object data to be viewed more easily for the user.

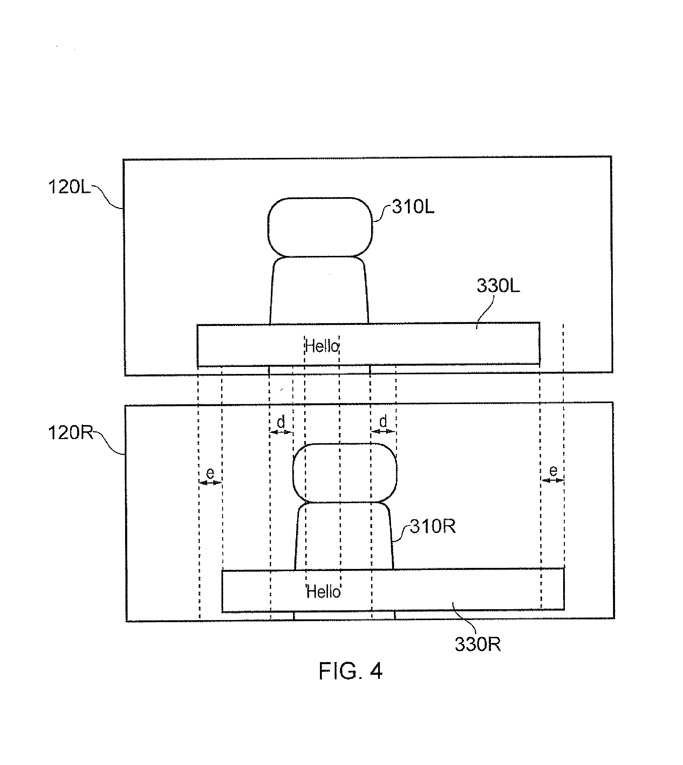

Referring to Figures 3 and 4, the positioning of the opaque section in 3D space is shown. As is seen in Figure 3, the user 130 is positioned in front of the display 120. In order to experience a character 310 appearing in front of the display 120, the user wears shutter glasses 140, in embodiments. The character 310 is just one example of a foreground component which is any object positioned closest to the viewer in 3D space.

Additionally, the opaque section 330, which is generated by the object handling device 220, is displayed. As is seen in Figure 3, the opaque section 330 is positioned in front of the character 310. Moreover, the opaque section 330 is positioned in 3D space as being the foremost object. In other words, the opaque section 330 appears to be positioned in front of the foreground component. Thus, the opaque section 330 has a more positive value in the z direction than the value of the character 310 in the z direction.

As shown in Figure 3, the object data is closed caption data stating the word "Hello" 340B. The object data 340B is overlaid on the opaque section 330 and is provided in a colour different to the opaque section so that it is visible. However, although the opaque section 330 appears quite close to the user 130 (i.e. on a plane having a larger positive value in the z direction than the character 310), the object data is, in embodiments, placed on the same plane as the screen 120. By placing the object data on the same plane as the screen (or in the screen plane hereinafter), the user will be able to focus more easily on the object data compared with any other position in the z direction.

The illustration is shown in Figure 3, where the object data "Hello" 340B is visible to the user 130 on the opaque section 330. However, the object data "Hello" 340A is, in embodiments, actually placed on the screen plane. As the opaque section 330 appears to be the foremost object in the image, the user has the effect of viewing the object data through the opaque section. In other words, the user appears to peer through the opaque section 330 to view the object data located on the screen plane.

Referring to Figure 4, a method of creating the appearance of Figure 3 will be described. In order to generate the stereoscopic image, a left eye version of an image and a right eye version of the image are displayed on the screen. The glasses enable the appropriate eye to view the correct image as it is displayed.

A left eye image 120L is generated. This includes a left eye character 310L and a left eye opaque section 330L. A corresponding right eye image 120R is generated. This includes a right eye character 310R and a right eye opaque section 330R. In order to generate the effect of the character 310 appearing close to the user, the left eye character 310L and the right eye character 310R are horizontally displaced by a distance d. This value may be a length or may be a certain number of pixels. However, as the opaque section 330 appears closer to the user 130 that the character 310, the left eye opaque section 330L and the right eye opaque section 330R are separated by a distance e, that is larger than d. The object data, which in this case, is the word "Hello", is overlaid on both the left eye opaque section 330L and the right eye opaque section 330R. However, as the object data is to be located on the screen plane in this embodiment, there is no horizontal displacement on the display between the left eye object data and the right eye object data. In other words, the object data in the left eye version is located at the same pixel position as the right eye version of the object data.

The value of the displacement of the left eye opaque section and the right eye opaque section, e, may be provided by the broadcaster and included in the input stream. Alternatively, the value of e may be derived from the displacement between the left eye character 310L and the right eye character 310R, d. As the opaque section 330 needs to be located in front of the character 310 in 3D space, the value of e must be greater than that of d. In other words, e>d. The amount by which e exceeds d may be constant or may vary. However, in order to not cause discomfort to the user, the value of e may be subject to a threshold. This threshold may be 1% of the screen width when the opaque section appears in front of the screen and 2% of the screen width if the opaque section is to appear behind the screen. However, these are only examples and the threshold may be the same irrespective of whether the opaque section is to appear in front of or behind the screen. Although the above threshold is a percentage of the screen width, the threshold may simply be a predetermined number of pixels, such as 20 pixels when the opaque section is to appear in front of the screen on a typical High Definition (HD) display.

Additionally, it may be possible to select a value for e and maintain this value for the duration of the program. This is advantageous because the value of d would then not need to be known. The value of e may be provided by the broadcaster or, where this is not provided by the broadcaster, would need to be calculated in the control box 200. However, this is computationally expensive. Therefore, in the absence of disparity metadata being provided, it is possible to set the value of e at the threshold distance. For example, as noted above, the value of e may be for example 1% of the screen width when the opaque section is to be located in front of the display. This would typically equate to 20 pixels. This is because, for home viewing, 3D programs (i.e. the value of d) does not normally exceed this value and so under normal circumstances, the opaque section will always be in front of the character 310.

Alternatively, the value of e can be calculated from the depth budget of a program. The depth budget is set by producers and defines the most positive and most negative position in the z direction that the character 310 can have. By knowing the depth budget, it is possible to set the value of e larger than this value thus ensuring that the opaque section 330 will always be the foreground objects.

The width, height and position on the screen of the opaque section may also alter. For example, the width and height of the opaque section may be adjusted depending on the amount of object data to be placed on the screen. So, in the case of the present example where only the word "Hello" is displayed, it may be appropriate to have an opaque section with a smaller width (or fill less horizontal space on the screen) or less height (or fill less vertical space on the screen). This ensures that less of the image is obscured by the opaque section.

It may be possible to also adjust the position on the screen of the opaque section. In the embodiments, the opaque section is placed towards the bottom of the image. However, if there is a large amount of objects, or movement in this area of the screen, it may not be appropriate to place the opaque section there. In this case, the opaque section may be better placed elsewhere on the screen, such as nearer the top of the screen, where there is less movement or objects. Positioning information for the opaque section may be provided by the broadcaster in the input stream, or may be calculated "on-the-fly" by the control box 200. The input images may be analysed for the number of other objects in the image and/or the amount of movement between successive frames and the positioning of the opaque section may be selected on the basis of this information. In other words, the positioning of the opaque section may be selected on the basis of the least amount of movement or number of objects in the image.

In embodiments, the opaque section may be moved only to specific areas on the screen. This improves the viewing experience for the user. Although it is possible to move the opaque section to any part of the screen, it is useful to ensure that the opaque section does not move too often. If the opaque section were to move regularly, the user may be distracted by the opaque section. Similarly, if the opaque section were to move to many different parts of the screen, then again the user may be distracted from the actual content of the image by the movement of the opaque section. In order to address this, in embodiments, the opaque section may only move to allocated screen positions. This may be at the top and bottom of the image only. Also, the opaque section may only move screen position when the number of objects and/or amount of movement in a particular area of the screen exceeds a threshold.

Although the foregoing has been explained with the object data being placed in both the left eye image and the right eye image, the invention is not so limited. It may be that the object data is only placed in one of the left eye image or the right eye image. In this case, the other eye will have the opaque section inserted into the image with no object data overlaid.

Although the foregoing has been explained with reference to the object data being placed on the screen plane, the invention is not so limited. Specifically, the object data can be placed on at any position along the z direction which has a z value less than the opaque section. This assists the user in focussing on the object data.

Although the foregoing has been described with reference to hardware, the invention is not so limited. In embodiments, the processes performed by the described hardware may be performed by computer software which contains computer readable instructions. These computer readable instructions form a computer program which may be read by a microprocessor or the like. The computer program may be stored on a storage medium such as an optically readable medium, a solid state memory device, a hard disk or the like. The computer program may be transferred over a network, such as the Internet as signals.

## Claims

1. A method of inserting object data into a stereoscopic image for display on a screen, comprising the steps of:
providing a first image having a foreground component and a second image having a foreground component, the second image foreground component being a horizontally displaced version of the first image foreground component;
inserting a first opaque section into the first image, and a second opaque section in the second image, the second opaque section being a horizontally displaced version of the first opaque section, wherein the displacement between the first image component and
the second image component is less than the displacement between the first opaque section and the second opaque section;
inserting the object data onto the first opaque section for display on the screen; and inserting the object data onto the second opaque section, wherein the object data is inserted in the second image at a similar pixel position to the object data inserted in the first image such that the object data is viewable as being substantially located on the screen plane.

2. A method according to claim 1, comprising inserting the first opaque section at a location in the first image which is determined in dependence upon the number of objects and/or the amount of movement between successive images in a section of the image.

3. A method according to claim 2, wherein the location of the first opaque section is determined in accordance with a threshold number of objects and/or movement in the first image.

4. A method according to any one of the preceding claims, comprising extracting position information indicating the position of the first opaque section from an input data stream.

5. A method according to any one of claims 1 to 3, comprising analysing the first image and determining the location of the first opaque section from said analysis.

6. A method according to any preceding claim, wherein the dimensions of the opaque section is determined in accordance with the size of the object data and/or the amount of movement and/or the number of objects in the first image.

7. A method according to any preceding claim, wherein the object data is supplemental visual content.

8. A method according to any preceding claim, wherein the displacement between the first opaque section and the second opaque section is either fixed at a predetermined distance or is a proportion of the screen width.

9. A method according to claim 8, wherein when the displacement is a proportion of the screen with the proportion of the screen width is 1%.

10. A computer program product comprising computer readable instructions which, when loaded onto a computer, configure the computer to perform a method according to any one of claims 1 to 9.

11. A storage medium configured to store the computer program of claim 10 therein or thereon.

12. An apparatus for inserting object data into a stereoscopic image for display on a screen, comprising:
a display controller operable to provide a first image having a foreground component and a second image having a foreground component, the second image foreground component being a horizontally displaced version of the first image foreground component;
said display controller being further operable to insert a first opaque section into the first image, and a second opaque section in the second image, the second opaque section being a horizontally displaced version of the first opaque section, wherein the displacement between the first image component and the second image component is less than the displacement between the first opaque section and the second opaque section; and operable to insert the object data onto the first opaque section for display on the screen, wherein the display controller is further operable to insert the object data onto the second opaque section, wherein the object data is inserted in the second image at a similar pixel position to the object data inserted in the first image such that the object data is viewable as being substantially located on the screen plane.

13. An apparatus according to claim 12, wherein the display controller is further operable to insert the first opaque section at a location in the first image which is determined in dependence upon the number of objects and/or the amount of movement between successive images in a section of the image.

14. An apparatus according to any one of claims 12 to 13, wherein the display controller is further operable to extract position information indicating the position of the first opaque section from an input data stream and/or analyse the first image and determining the location of the first opaque section from said analysis.

15. An apparatus according to any one of claims 12 to 14, wherein the displacement between the first opaque section and the second opaque section is fixed at either a predetermined distance or is a proportion of the screen width.
